# EUROPEAN PATENT APPLICATION

(11) **EP 3 667 024 A1**
(43) Date of publication of application: **17.06.2020**
(21) Application number: 19208437.4
(22) Date of filing: 12.11.2019
(51) Int. Cl.: F01D 11/00

(54) **SEAL SEGMENT FOR A SHROUD RING OF A GAS TURBINE ENGINE**

(30) Priority: 12.12.2018 GB 201820224
(71) Applicant: Rolls-Royce plc, London N1 9FX (GB)
(72) Inventor: Hillier, Steven, Derby, Derbyshire DE24 8BJ (GB)
(74) Representative: Rolls-Royce plc

(57) **Abstract**

A seal segment (60,62) is disclosed for a shroud ring of a rotor of a gas turbine engine. The gas turbine engine has a principal axis (9), there being defined an axial direction (A) parallel to the principal axis (9), a radial direction (R) perpendicular to the principal axis (9) and a circumferential direction (C) perpendicular to the radial direction and the axial direction. The seal segment comprises a radially inner side and a radially outer side, wherein the seal segment comprises a circumferential side face with a slot extending axially along the seal segment and circumferentially into the seal segment. The slot is for retaining a strip seal therein. There is provided at least one relief slit (80,82) formed in the seal segment from the radially outer side of the seal segment and in communication with the slot (72,74).

## Description

The present invention relates to a seal segment for use in a shroud ring for a rotor of a gas turbine engine. The present invention also relates to a shroud ring and to a gas turbine engine incorporating such a seal segment and/or shroud ring. The present invention also relates to a method for the manufacture of a seal segment.

Compressors and turbines typically include alternating stages of static vane assemblies and rotating wheel assemblies. The rotating wheel assemblies may include disks carrying blades around their outer edges. When the rotating wheel assemblies turn, tips of the blades move along blade tracks included in static shrouds that are arranged around the rotating wheel assemblies. Such static shrouds may be coupled to an engine case that surrounds the compressor, the combustor, and the turbine. Some shrouds are made up of a number of segments arranged circumferentially adjacent to one another to form a ring. Such shrouds sometimes include sealing elements between parts to block air from leaking through the shroud during operation of the gas turbine engine. Thus, more air is forced to pass over the blades included in the rotating wheel assemblies which extract work from the air.

The performance of the simple gas turbine engine cycle, whether measured in terms of efficiency or specific output is improved by increasing the turbine gas temperature. It is therefore desirable to operate the turbine at the highest possible temperature. For any engine cycle compression ratio or bypass ratio, increasing the turbine entry gas temperature will always produce more specific thrust (e.g. engine thrust per unit of air mass flow). However as turbine entry temperatures increase, it is necessary to develop components and materials better able to withstand the increased temperatures.

This has led to the replacement of metallic shroud segments with ceramic matrix composite shroud segments having higher temperature capabilities. To accommodate the change in material, however, adaptations to the segments have been proposed. For example, EP 0751104 discloses a ceramic segment having an abradable seal which is suitable for use with nickel base turbine blades, and EP 1965030 discloses a hollow section ceramic seal segment.

A difficulty with ceramic shroud segments is their typically lower thermal expansion coefficient relative to the metallic parts of the engine. Differential thermal mismatches can make fixing of the segments to the engine problematic and can lead to unacceptable loadings on the segments.

A further difficulty, particularly with ceramic matrix composite shroud segments, is configuring the segments in a way that is compatible with composite forming techniques. One approach to address this difficulty is set out for example in EP 2690260.

Ceramic Matrix Composites (CMSs) are materials that comprise ceramic fibres embedded in a ceramic matrix. CMCs typically exhibit desirable mechanical, chemical and physical properties at high temperatures. For example, CMCs are typically more resistant to oxidation at high temperatures than are metals. CMCs are generally tougher than monolithic ceramics and exhibit damage tolerance. SiC/SiC CMCs are one example of a composite material that exhibits excellent high temperature mechanical, physical and chemical properties. Such materials are suitable for a number of high temperature applications, such as for use in producing hot sector components of gas turbine engines. SiC/SiC CMC engine components allow gas turbine engines to operate at much higher temperatures than engines having superalloy metal components.

CMCs may be produced by a variety of processes. One process for producing CMCs uses chemical vapour infiltration (CVI) to deposit the matrix material on a network of fibres.

According to a first aspect there is provided in this disclosure a seal segment (60, 62) for a shroud ring (50) of a rotor (52) of a gas turbine engine, the gas turbine engine having a principal axis (9), there being defined an axial direction (A) parallel to the principal axis (9), a radial direction (R) perpendicular to the principal axis (9) and a circumferential direction (C) perpendicular to the radial direction and the axial direction, the seal segment comprising a radially inner side and a radially outer side, wherein the seal segment comprises a circumferential side face (68, 70) with a slot (72, 74) extending axially along the seal segment and circumferentially into the seal segment, for retaining a strip seal (76) therein, and wherein there is provided at least one relief slit (80, 82) formed in the seal segment from the radially outer side of the seal segment and in communication with the slot (72, 74).

According to a second aspect there is provided in this disclosure a method for manufacturing a seal segment (60, 62) according to the first aspect, including forming at least one relief slit (80, 82) in the seal segment from the radially outer side of the seal segment and communicating with the slot (72, 74).

According to a third aspect there is provided in this disclosure a shroud ring (50) of a rotor (52) of a gas turbine engine, the shroud ring comprising a circumferential array of seal segments (60, 62) according to the first aspect, circumferentially engaged with respect to each other by respective strip seals retained in the slots (72, 74) of the seal segments (60, 62).

According to a fourth aspect there is provided in this disclosure a gas turbine engine for an aircraft incorporating a seal segment according to the first aspect and/or a shroud ring according to the third aspect.

In further aspects, the disclosure may be applied to one or more vanes where inter-component sealing is required.

Accordingly, in a fifth aspect there is provided in this disclosure a vane component of a gas turbine engine, the gas turbine engine having a principal axis, there being defined an axial direction parallel to the principal axis, a radial direction perpendicular to the principal axis and a circumferential direction perpendicular to the radial direction and the axial direction, the vane component having a radially inner side and a radially outer side, wherein the vane component has a circumferential side face with a slot extending axially along the seal segment and circumferentially into the vane component, for retaining a strip seal therein, and wherein there is provided at least one relief slit formed in the vane component from the radially outer side of the vane component and communicating with the slot.

According to a sixth aspect there is provided in this disclosure a method for manufacturing a vane component according to the fifth aspect, including forming at least one relief slit in the vane component from the radially outer side of the vane component and communicating with the slot.

According to a seventh aspect there is provided in this disclosure a vane arrangement of a gas turbine engine, the vane arrangement comprising a circumferential array of vane components according to the fifth aspect, circumferentially engaged with respect to each other by respective strip seals retained in the slots of the vane components.

According to a, eighth aspect there is provided in this disclosure a gas turbine engine for an aircraft incorporating a vane component according to the fifth aspect and/or a vane arrangement according to the seventh aspect.

Optional features of the present disclosure will now be set out. These are applicable singly or in any combination with any aspect of the present disclosure.

The seal segment may have a substantially plate-like, shape. A suitable shape is a rectangular shape.

The seal segment may be formed of ceramic, and, in particular, may be formed of ceramic matrix composite. For example, the seal segment may be formed of continuous fibre reinforced ceramic matrix composite. In such a segment, the reinforcing fibres may be contained in layered plies which extend parallel to the radially inward facing surface of the seal segment. The orientation of the fibres in the plies may alternate from ply to ply. The CMC optionally has through thickness fibre reinforements.

There are many CMC composite materials, commonly formed from a ply stack (for example, such as 3D weave or alternative form of fibre manipulation) manipulated into form during the manufacturing process. The fibres may for example be formed of an oxide ceramic or a carbide ceramic. A suitable carbide ceramic is SiC. The matrix may for example be formed of an oxide ceramic or a carbide ceramic. A suitable carbide ceramic is SiC. Therefore in one embodiment a predominantly continuous fibre reinforced ceramic matrix composite is formed of SiC fibres embedded in an SiC matrix.

The radially inner part of the segment may be formed of a bondcoat, environmental barrier coating, thermal barrier coating, abradable coating or any combination of the aforementioned coatings.

The matrix material may for example be deposited by chemical vapour infiltration (CVI)> CVI may be carried out a temperature in the range of about 300 °C to about 2000°C. CVI may be carried out a pressure in the range of about 0.1 torr to about 10 atm.

In the fibre preform, the fibre volume may be in the range 15-50 vol %. This is intended to express the actual volume occupied by the fibre compared with the apparent total volume of the fibre preform. The fibre volume may be in the range 30-40 vol %.

The fibres may have one or more surface coatings. These may be applied before or after assembly of the fibres into the fibre preform. Suitable surface coatings include coatings to affect the high temperature oxidation resistance of the fibres.

One suitable SiC fibre is HI-NICALON™ manufactured by Nippon Carbon Co., Ltd. of Japan. This is a multi-filament SiC fibre. Typical filament diameter is in the range 10-20 µm. There may be about 500 filaments per tow. Another suitable material is HI-NICALON TYPE-S™

The seal segment (60, 62) may have slots formed at opposing circumferential faces, to accommodate a respective strip seal (76).

The strip seal (76) may be retained against a radially inner surface of the slot and against a radially outer surface (84, 85) of the slot.

The relief slit (80, 82) may extend circumferentially in the seal segment.

The relief slit (80, 82) may have a circumferential depth along direction C of at least the circumferential depth of the slot (72). The relief slit (80, 82) may have a circumferential depth along direction C which is greater than the circumferential depth of the slot (72).

The radial depth of the relief slit (80, 82) is typically sufficient to communicate with the slot (72). Thus, typically the relief slit penetrates through the radially outer surface (84) of slot (72). However, it is not intended that the relief slit penetrates through the radially inner surface (83). Thus, the maximum depth of the relief slit may be the distance between the radially inner surface (83) of the slot and the radially outer surface of the seal segment.

Two or more relief slits (80, 82) may be formed in the seal segment per slot. Three or more relief slits (80, 82) may be formed in the seal segment per slot. In general, the number and spacing of the relief slits (80, 82) is adapted to ensure adequate relief of strain in the seal segment under engine operational conditions. For example, the relief slits (80, 82) may be formed in a regularly spaced array spaced axially along the seal segment (60, 62).

The axial width of the or each of the relief slits (at least at the time of manufacture) may be small. For example, the axial width of the or each of the relief slits may be less than 5 mm, less than 4 mm, less than 3 mm or less than 2 mm.

The relief slits may be formed for example by a cutting wheel or by electrical discharge machining (EDM). Additionally or alternatively, it is possible to form the relief slits in situ, e.g. during CMC manufacture.

The slot may extend to the front and/or rear face of the component. It may extend through the front and/or rear face of the component. Alternatively, the slot may or finish short to create a 'letter box' type slot. If a through going slot is created an axial retention feature may be required. The strip seal (76a) may have an engagement feature (90) upstanding from one surface. Engagement feature (90) may be located and dimensioned to engage with a relief slit (80) in the seal segment (60). This is intended to reduce or prevent axial movement of the strip seal along the slot (72). The engagement feature may be present anywhere along the length of the strip seal, even for example at the end of the strip seal.

The slot (72a) formed in the seal segment typically has a radially inner surface (83a), a radially outer surface (84a) and a circumferential end surface (89a). At the circumferential end of the slot, an additional recess (92) may be formed between the radially inner surface (83a) and the circumferential end surface (89a), additional recess (92) extending axially along the slot (72a). The purpose of this additional recess (92) is to reduce or remove contact between the sealing strip (76) and the corner of the slot (72a) that would otherwise be there without the presence of the additional recess (92). This reduces or prevents the strip seal 76 from 'climbing' the radius formed at the corner of the groove when the additional recess (92) is not present. Such 'climbing' can greatly reduce sealing effectiveness.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38, 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.
The radius of the fan may be measured between the engine centreline and the tip of a fan blade at its leading edge.

The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all values being dimensionless). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.
The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 shows a schematic perspective view of parts of two adjacent seal segments with a strip seal interposed between them, this being a reference arrangement;
Figure 5 shows a schematic perspective view of parts of two adjacent seal segments with a strip seal interposed between them, according to an embodiment;
Figure 6A shows a cross sectional perspective view through a seal segment according to an embodiment;
Figure 6B shows a cross sectional perspective view through a seal segment according to a modified embodiment;
Figure 7 shows a strip seal for use in an embodiment;
Figure 8A shows a schematic perspective view of parts of two adjacent seal segments with a strip seal interposed between them, according to a modified embodiment;
Figure 8B shows a schematic perspective sectional view of an alternative form for one of the seal segments of Figure 8A.
Figure 8C shows a sectional view of the embodiment of Figure 8B.
Figure 9 shows a schematic flow diagram of the process for providing the fibre preform.
Figures 10, 11, 12 and 13 show schematically suitable processes for consolidation of a CMC.

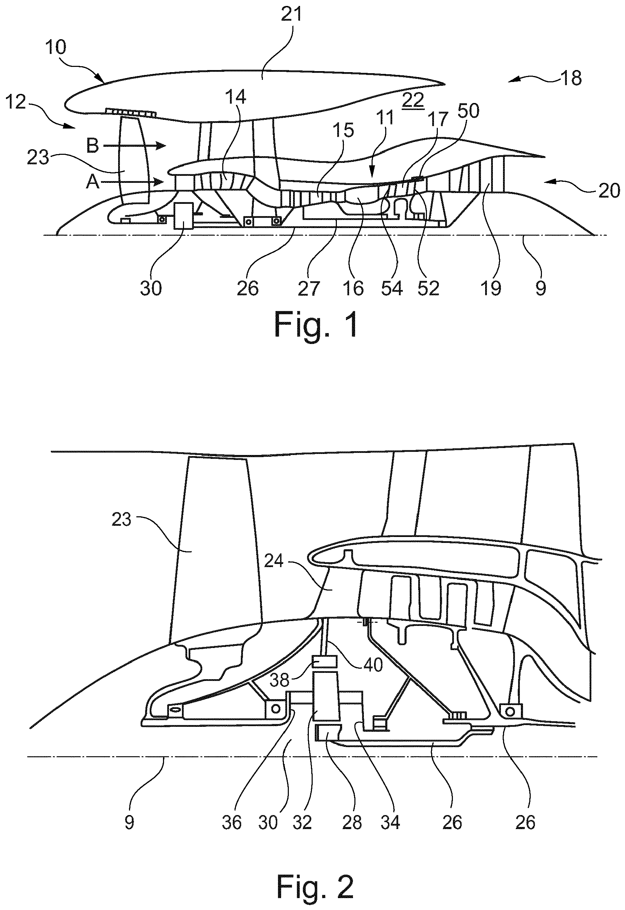

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

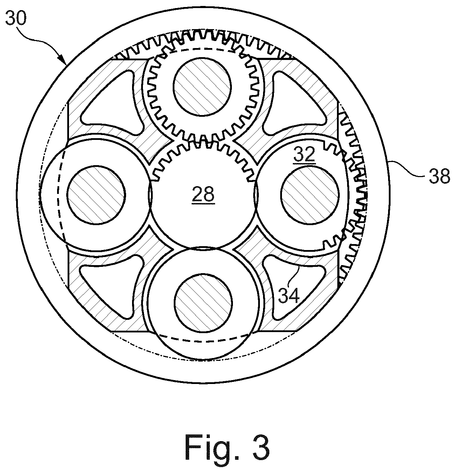

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The high pressure turbine 17 includes an annular array of radially extending rotor aerofoil blades 52. Hot turbine gases flow over the nozzle guide vanes 54 and the aerofoil blades 52 in the left to right direction across Figure 1. A shroud ring 50 is positioned radially outwardly of the shroudless aerofoil blades. The shroud ring 50 serves to define the radially outer extent of a short length of the gas passage through the high pressure turbine 17.

The turbine gases flowing over the radially inward facing surface of the shroud ring 50 are at extremely high temperatures. Consequently, at least that portion of the ring must be constructed from a material which is capable of withstanding those temperatures whilst maintaining its structural integrity. Ceramic materials are particularly well suited to this sort of application.

The shroud ring 50 is formed from an annular array of seal segments attached to a part of the engine casing which takes the form of an annular, metallic backing plate.

In one embodiment, this disclosure provides a seal segment for the shroud ring for the gas turbine engine described above.

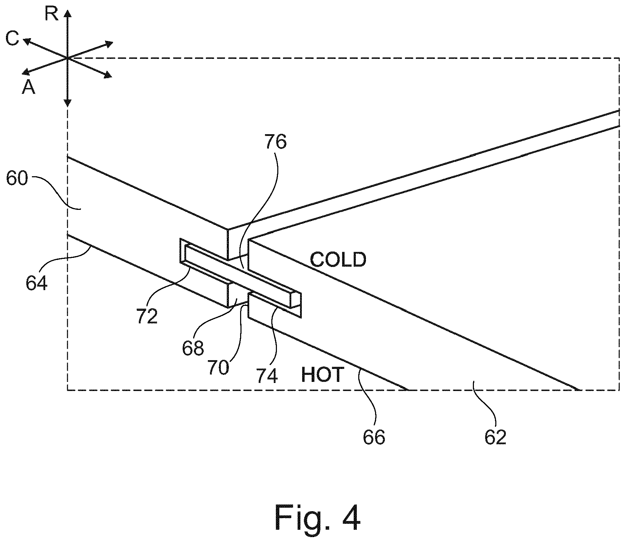

In order to understand the context of the present disclosure, reference is first made to Figure 4. Figure 4 shows two adjacent seal segments 60, 62 formed of CMC as will be described later. Considering the orientation of the seal segments with respect to the principal axis 9 of the engine, direction A shown in Figure 4 corresponds to the axial direction of the engine (parallel to the principal axis). Direction C is perpendicular to direction A and corresponds to the circumferential direction. Direction R is perpendicular to directions A and C is corresponds to the radial direction.

In this embodiment, each seal segment 60, 62 has a substantially plate-like, rectangular shape. In other embodiments, alternative shapes are possible, such as box section, I-beams, etc. Typically they provide an approximately cylindrical inner surface. The back face geometry is typically part of the load transfer/positioning solution. The radially outer part of each segment is formed from continuous fibre reinforced ceramic matrix composite (CMC). The radially inner part 64, 66 of each segment is formed of a suitable coating, according to operational requirements, optionally acting as a thermal barrier coating.

EP 2690260 contains details of support structures for the seal segments and for their mounting in the engine. Therefore those details are not repeated here.

The circumferentially opposing side faces 68, 70 of the segments 60, 62 each contain a respective slot 72, 74 which extends in the axial direction A of the engine and, in the assembled shroud ring, cooperate to retain a strip seal 76 for sealing seal segment 60 to the circumferentially adjacent seal segment 62. As will be understood, the shroud ring corresponds to a circumferential sequence of seal segments, each sealed with respect to its circumferential neighbour by a corresponding arrangement of axial slot and strip seal. For an individual seal segment, therefore, the circumferentially opposing side faces of the segment each contain a respective slot to receive a respective strip seal.

Advantageously, the plate-like, rectangular shape (or alternatively a box shape with incorporated strip seal slot) of the seal segment 60, 62 is compatible with conventional continuous fibre reinforced ceramic matrix composite production techniques. More particularly, the radially outer part of the segment 60, 62 can be produced by stacking successive plys which extend parallel to the radially inward facing surface of the segment. Each ply can be formed from a cloth of woven continuous reinforcement. As each ply is stacked it may be covered in a slurry containing a binder, water and ceramic. Alternatively, the plys may be pre-impregnated with the slurry. The stacked plys may be pressed to remove excess slurry, and heated to drive off moisture which allows the binder to form a self-supporting green form. The green may then be heated in a furnace to sinter the ceramic particles to form the surrounding matrix. A lightly curved or straight-sided block can readily be formed in this way. Other features (described in more detail below) can be produced by subsequent machining.

By way of example, the reinforcement fibres can be Nextel720™ and/or Nextel610™ alumina silicate fibres available from 3M, and the ceramic particles can be alumina particles or a mixture of alumina and silicate particles. These are examples of Ox/Ox ceramic matrix composite materials. Another option, however, is to form the seal segment from a SiC/SiC ceramic matrix composite material, having a silicon carbide based matrix and silicon carbide based reinforcement fibres. A SiC/SiC seal segment can be manufactured by CVI (Chemical vapour infiltration), and/or MI (melt infiltration), SI (slurry infiltration), and/or SMI (slurry melt infiltration), for example. Further details on these aspects are set out below.

As explained in part above, the material used for the segment may be a continuous fibre reinforced ceramic matrix composite. The fibres may for example be formed of an oxide ceramic or a carbide ceramic. A suitable carbide ceramic is SiC. The matrix may for example be formed of an oxide ceramic or a carbide ceramic. A suitable carbide ceramic is SiC. Therefore in one embodiment the continuous fibre reinforced ceramic matrix composite is formed of SiC fibres embedded in an SiC matrix. The reinforcing fibres may be contained in layered plies, the orientation of the fibres in the plies optionally alternating from ply to ply.

In forming the fibre preform, a fibre network is produced. For example, the fibre network can be a near net shape preform of the component. This is referred to here as a fibre preform. The fibre volume in the fibre preform may range between about 15% and about 50%. More specifically, the fibre volume in the fibre preform may typically range between about 30% and about 40%.

The fibre may be continuous. In principle, it is possible for a continuously wound single fibre to be formed into the required fibre preform. In this case, the advantageous effects are seen as if the fibre preform was formed of an array of long individual fibres. Thus, references herein to "fibres" are intended also to refer to portions of a continuously wound single fibre, as appropriate.

The fibre preform may be coated with one or more interface coatings. The interface coatings can be selected to perform a number of functions, such as resisting crack propagation, increasing toughness of the matrix, improving bonding between the matrix and the fibres or producing other desirable results. The fibres may be coated by CVI or other methods.

The main matrix material, or a precursor thereof, is then deposited on the fibres. The materials may be deposited by a CVI process in which gases are introduced into a furnace and are deposited on the fibre preform through chemical reaction and infiltration. The gases may be activated by thermal energy, ultraviolet light, microwaves or other means. Deposition typically occurs at a temperature between about 300 °C to about 2000 °C, depending on the process and materials selected. Furnace pressure typically ranges from about 0.1 torr to about 10 atm. The thickness of the matrix material can be adjusted to vary the initial load sharing conditions between the fibres and the matrix.

The CMC (ceramic matrix composite) may undergo further processing after deposition of the matrix material. For example, the CMC may be further processed by polymer infiltration and pyrolysis (PIP), slurry infiltration, melt infiltration, further CVI, heat treating to obtain a desired material microstructure or combinations of the foregoing. In some cases it may be desirable to precondition a component by stressing it at elevated temperature to increase the matrix cracking stress. This may be particularly desirable when the matrix exhibits greater creep than the fibre.

One suitable SiC fibre is HI-NICALON™ manufactured by Nippon Carbon Co., Ltd. of Japan. This is a multi-filament SiC fibre. Typical filament diameter is in the range 10-20 µm. There may be about 500 filaments per tow.

Additional explanations of different processes for forming CMC composites are now set out. CMC manufacture typically consists of four main steps. The first step is fibre forming. Individual fibres are gathered into groups called tows. A 'size' is applied to protect the fibre from damage, the size later being washed or burnt off. Tows are woven into cloth (such as a 5-harness satin) or 3D form. Cloth is laid into a tool and formed to the correct shape. 3D forms fit directly into a tool. A binder may be used to fix the relative position of the fibres.

In addition to 3D weaving, further options for weaving include braided and 2.5D weaving, or combinations of these options.

The second step is consolidation. A number of techniques can be used in isolation or combination to form the matrix material around the fibres. The most commonly used are CVI (Chemical Vapour Infiltration), SI (Slurry Infiltration), MI (Melt Infiltration) and SMI (Slurry Melt Infiltration). Some process are slow or may need repeating multiple times to achieve the required thickness of deposition or component density.

The third step is machining. The final component is shaped usually with minimal machining to prevent cutting or exposing fibres to the environment. An additional processing step may be after machining to 'seal' the cut end of the fibres.

The fourth step is coating. TBC (Thermal Barrier Coating) or EBC (Environmental Barrier Coatings) may be applied to some or all of the component to prevent degradation in use.

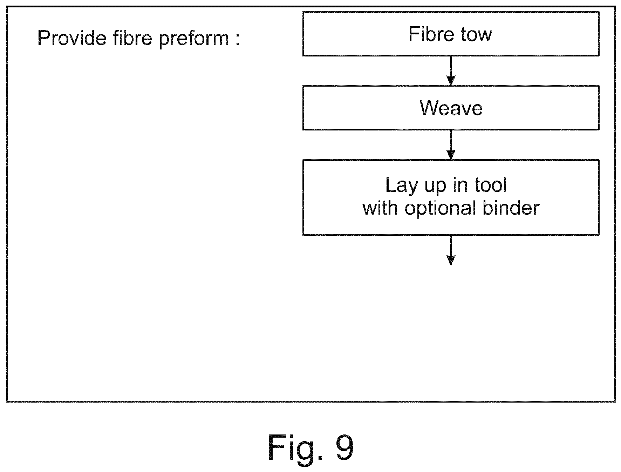

Figure 9 shows a schematic flow diagram of the process for providing the fibre preform.

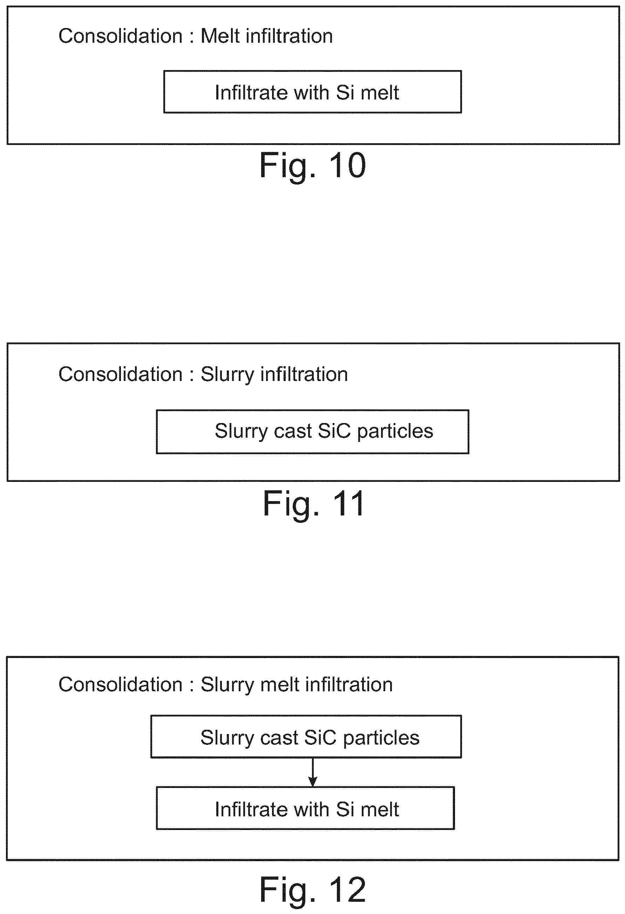

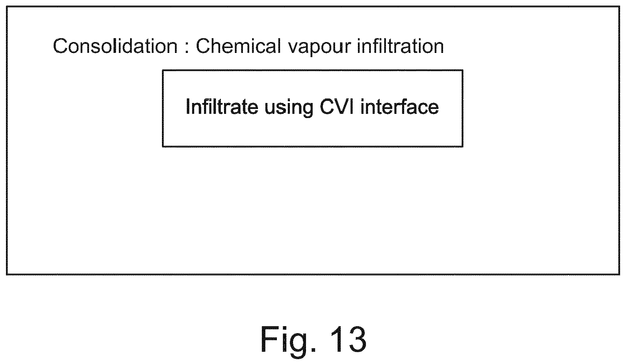

Figures 10, 11, 12 and 13 show schematically suitable processes for consolidation of the CMC. These processes may be combined as appropriate.

Following the consolidation, the component may be finish machined in order to produce the finished component.

Considering again the reference arrangement shown in Figure 4, the strip seal slot 72, 74 machined into the side of the seal segment 60, 62 produces a disconnect between the hot gas wash surface and the coolant side of the part. The result is a hotter gas wash surface and cooler back face. The hotter side has a greater level of thermal expansion than the cooler side and the resultant strain can be damaging to the component.

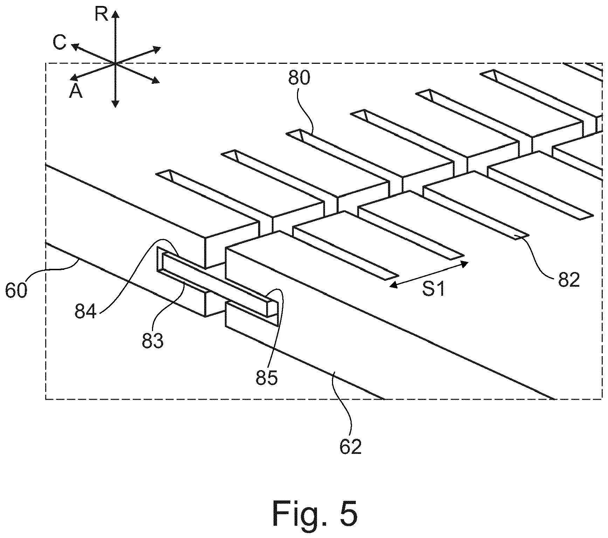

These problems are addressed in the embodiment illustrated in Figure 5. Corresponding features of Figures 4 and 5 remain the same and are not described again.

At the radially outer side of the seal segments 60, 62, relief slits 80, 82 are formed through the thickness of the seal segments to reach the slots 72, 74. As in Figure 4, slots 72, 74 cooperate to retain a strip seal 76 for sealing seal segment 60 to the circumferentially adjacent seal segment 62. The strip seal 76 is retained against the radially inner surface of the slot and against the radially outer surface 84, 85 of the slot. Relief slits 80, 82 are formed in a regularly spaced array spaced axially along the seal segments 60, 62.

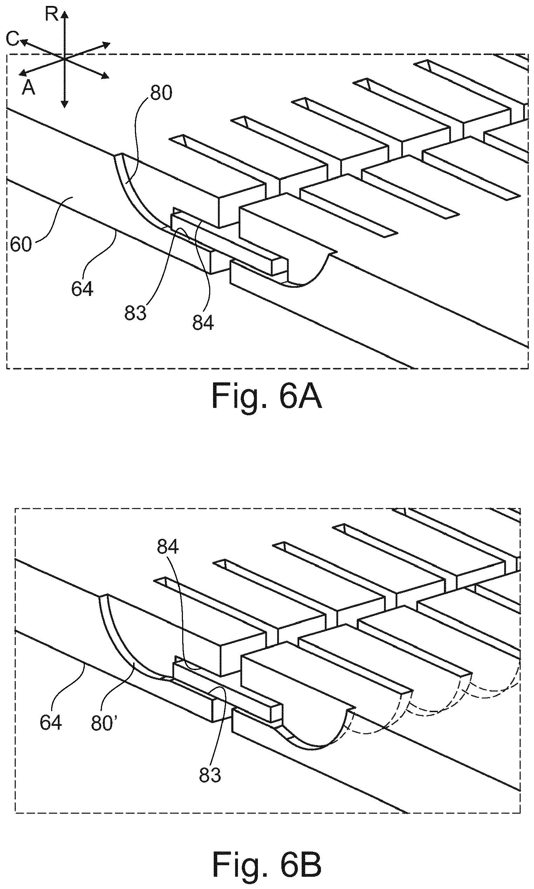

Figure 6A shows a cross sectional view, taken perpendicular to the axial direction but the view shown in perspective, along one of the relief slits 80 in seal segment 60. As can be seen from Figure 6A, the relief slit 80 has a circumferential depth (along direction C) of at least (and typically greater than) the circumferential depth of the slot 72. Furthermore, considering the slot 72 having a radially inner surface 83 and a radially outer surface 84, the radial depth of the relief slit is typically sufficient to communicate with the slot 72, and so typically the relief slit penetrates through the radially outer surface 84 of slot 72.

Figure 6B shows a modified embodiment compared with Figure 6A. Corresponding features between these drawings are given the same reference numbers. As shown in Figure 6B, it is possible for relief slit 80' to extend to a radial depth that is deeper than surface 83. Typically, it is required that the relief slit does not compromise the sealing performance. However, as shown in Figure 6B, in an arrangement in which the relief slit does extend radially deeper than surface 83, this can provide a defined leakage path and/or cooling hole type feature. This can be used to eject air or help keep the groove/strip cool or beneath an imposed temperature limitation.

The relief slits have the effect of separating the cold side of the strip seal slot into isolated portions. This allows the cold side of the strip seal slot to expand with the hot side, by opening up of the relief slits.

The relief slits do not significantly affect sealing performance. However, in order to avoid other unwanted effects, the relief slits should be made thin (in the axial direction A). As indicated in Figure 5, the axial width of the relief slits typically depends on their mode of formation. Where the relief slits are formed using a diamond wheel, for example, a typical thickness is about 1.0 mm (minimum). Where formed by electrical discharge machining (EDM), for example, a typical thickness is about 0.4 mm (minimum).

The axial spacing between the slits is indicated as S1 in Figure 5. Other axial spacing between the slits can be used as appropriate, to accommodate the expected strain.

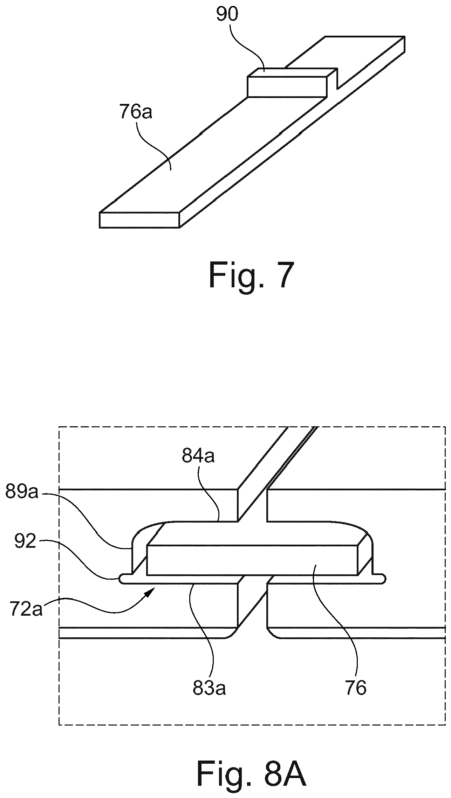

Figure 7 shows a modified strip seal 76a, for use with the embodiments described previously. Strip seal 76a has an engagement feature 90 upstanding from one surface. The intention is that engagement feature 90 engages with a relief slit 80 in the seal segment 60. This reduces or prevents axial movement of the strip seal along the slot 72.

Figure 8A shows another modified embodiment. In this case, slot 72a has a modified form compared with Figures 4 or 5. The slot 72a has a radially inner surface 83a, a radially outer surface 84a and a circumferential end surface 89a. At the circumferential end of the slot, an additional recess 92 is formed between the radially inner surface 83a and the circumferential end surface 89a. Additional recess 92 extends axially along the slot. The purpose of the additional recess 92 is to remove contact between the sealing strip 76 and the corner of the slot 72a that would otherwise be there without the presence of additional recess 92. The additional recess 92 can be formed by grinding or wire EDM, for example. This reduces or prevents the strip seal 76 from 'climbing' the radius formed at the corner of the groove when the additional recess 92 is not present. Such 'climbing' can greatly reduce sealing effectiven ess.

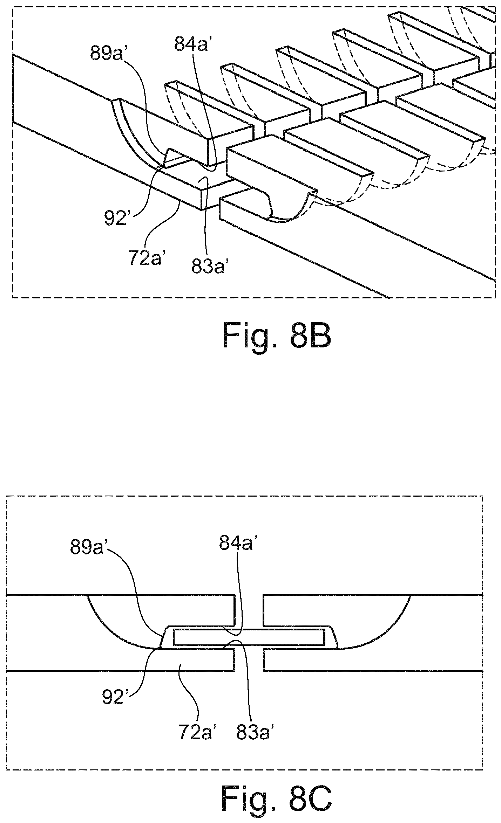

Figures 8B and 8C show a further modified embodiment, modified from the embodiment of Figure 8A. As in Figure 8A, slot 72a' has a radially inner surface 83a', a radially outer surface 84a' and a circumferential end surface 89a'. At the circumferential end of the slot, an additional recess 92' is formed between the radially inner surface 83a' and the circumferential end surface 89a'. Additional recess 92' extends axially along the slot. As for Figure 8A, the purpose of the additional recess 92' is to remove contact between the sealing strip and the corner of the slot 72a' that would otherwise be there without the presence of additional recess 92'. The shape used in Figures 8B and 8C is considered to be more compatible with CMC manufacturing processes than Figure 8A. As for Figure 8A, the additional recess 92' reduces or prevents the strip seal from 'climbing' the radius formed at the corner of the groove when the additional recess 92' is not present.

All references referred to above are hereby incorporated by reference in their entirety.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A seal segment (60, 62) for a shroud ring (50) of a rotor (52) of a gas turbine engine, the gas turbine engine having:
a principal axis (9), there being defined an axial direction (A) parallel to the principal axis (9), a radial direction (R) perpendicular to the principal axis (9), and, a circumferential direction (C) perpendicular to the radial direction and the axial direction;
the seal segment comprising a radially inner side and a radially outer side;
wherein the seal segment comprises a circumferential side face (68, 70) with a slot (72, 74) extending axially along the seal segment and circumferentially into the seal segment, for retaining a strip seal (76) therein; and,
wherein there is provided at least one relief slit (80, 82) formed in the seal segment from the radially outer side of the seal segment and in communication with the slot (72, 74).

2. The seal segment as claimed in claim 1, wherein the seal segment (60, 62) is formed of ceramic.

3. The seal segment as claimed in claim 1 or claim 2, wherein the seal segment (60, 62) is formed of ceramic matrix composite.

4. The seal segment as claimed in any one of claims 1 to 3, having slots (72, 74) formed at opposing circumferential faces, to accommodate a respective strip seal (76).

5. The seal segment as claimed in any one of claims 1 to 4, wherein the relief slit (80, 82) extends circumferentially in the seal segment.

6. The seal segment as claimed in any one of claims 1 to 5, wherein the relief slit (80, 82) has a circumferential depth along direction C of at least the circumferential depth of the slot (72).

7. The seal segment as claimed in any one of claims 1 to 6, wherein the strip seal (76) is retained against a radially inner surface of the slot and against a radially outer surface (84, 85) of the slot.

8. The seal segment as claimed in any one of claims 1 to 7, having two or more relief slits (80, 82) formed in the seal segment per slot.

9. The seal segment as claimed in claim 8, wherein the relief slits (80, 82) are formed in a regularly spaced array spaced axially along the seal segment (60, 62).

10. The seal segment as claimed in any one of claims 1 to 9, wherein the axial width of the or each relief slit is less than 5 mm.

11. The seal segment as claimed in any one of claims 1 to 10, wherein the strip seal (76a) has an engagement feature (90) upstanding from one surface, the engagement feature (90) being located and dimensioned to engage with a relief slit (80) in the seal segment (60).

12. The seal segment as claimed in any one of claims 1 to 11, wherein the slot (72a) formed in the seal segment has a radially inner surface (83a), a radially outer surface (84a) and a circumferential end surface (89a), and at the circumferential end of the slot, an additional recess (92) is formed between the radially inner surface (83a) and the circumferential end surface (89a), additional recess (92) extending axially along the slot (72a).

13. A method for manufacturing the seal segment (60, 62) as claimed in any one of claims 1 to 12, including forming at least one relief slit (80, 82) in the seal segment from the radially outer side of the seal segment and communicating with the slot (72, 74).

14. A shroud ring (50) of a rotor (52) of a gas turbine engine, the shroud ring comprising a circumferential array of seal segments (60, 62) as claimed in any one of claims 1 to 12, circumferentially engaged with respect to each other by respective strip seals retained in the slots (72, 74) of the seal segments (60, 62).

15. A gas turbine engine (10) for an aircraft incorporating either or both of the seal segment as claimed in any one of claims 1 to 12 and the shroud ring as claimed in claim 14.
